# EUROPEAN PATENT APPLICATION

(11) **EP 4 800 376 A1**
(43) Date of publication of application: **02.09.2026**
(21) Application number: 26160602.4
(22) Date of filing: 25.02.2026
(51) Int. Cl.: G01N 21/64

(54) **ANALYSIS SYSTEM AND ANALYSIS METHOD**

(30) Priority: 26.02.2025 JP 2025028685
(71) Applicant: Konica Minolta, Inc., Tokyo 100-7015 (JP)
(72) Inventor: HASHIMOTO, Yuki, Tokyo, 100-7015 (JP); TAKAHASHI, Rieko, Tokyo, 100-7015 (JP); AOKI, Youichi, Tokyo, 100-7015 (JP)
(74) Representative: Gille Hrabal Partnerschaftsgesellschaft mbB Patentanwälte

(57) **Abstract**

An object of the present invention is to provide an analysis system capable of accurately analyzing the state of a dispersion liquid without performing complicated measurement or examining each parameter. The analysis system for achieving the object is an analysis system for analyzing a state of a dispersion liquid containing a liquid dispersion medium and a solid dispersoid dispersed in the dispersion medium, and includes: a signal generator for generating signals based on interaction of the dispersion liquid with two or more types of luminescent probes; a detector for detecting the signals from the signal generator; and an analyzer for analyzing the signals detected by the detector to analyze the state of the dispersion liquid. Each luminescent probe is a compound including a binder for interacting with the dispersion medium and/or the dispersoid and a light emitter whose light emission behavior changes due to the interaction.

## Description

### BACKGROUND OF THE INVENTION

### 1. Field of the Invention

The present invention relates to an analysis system and an analysis method.

### 2. Description of Related Art

In order to analyze the state of a dispersion liquid containing a dispersion medium and a dispersoid, various measurements have been performed, such as measurement of the viscosity of the dispersion liquid, measurement of the surface tension, and measurement of the zeta potential of the dispersoid. In general, the physical properties of a dispersion liquid are determined by a complex combination of various parameters. Therefore, for analyzing the state of a dispersion liquid, it is necessary to acquire a large amount of data by a plurality of measurement methods. In addition, it is necessary to individually examine which parameter contributes to which physical property of the dispersion liquid. Therefore, there has been a problem that a huge amount of work is required for acquisition of data, and furthermore, analysis of data is also very complicated.

Japanese Unexamined Patent Publication No. 2015-102386 proposes a method for measuring the zeta potential distribution of dispersoids, and controlling the quality of ink and predicting ejection durability based on the measurement results.

However, it is very difficult to set conditions for the measurement of the zeta potential. For example, the dispersoid may be deformed in measurement of the zeta potential depending on the type of particles in the dispersion liquid. Therefore, accurate measurement is difficult, and a discrepancy tends to occur between the performance predicted from the data and the actual performance. In addition, the performance of the dispersion liquid is largely influenced by factors other than the dispersoid. Therefore, it has been difficult to accurately analyze the state of the dispersion liquid only by the above-described method.

### SUMMARY OF THE INVENTION

An object of the present invention is to provide an analysis system and an analysis method capable of accurately analyzing the state of a dispersion liquid without performing complicated measurement or examining each parameter.

In order to achieve at least one of the above-described objects, the following analysis system and analysis method are provided.

An analysis system reflecting one aspect of the present invention is an analysis system for analyzing a state of a dispersion liquid containing a dispersion medium in a liquid state and a dispersoid in a solid state and dispersed in the dispersion medium, the analysis system including: a signal generator for generating a plurality of signals based on interaction of the dispersion liquid with two or more types of luminescent probes; a detector for detecting the plurality of signals from the signal generator; and an analyzer for analyzing the plurality of signals detected by the detector to analyze the state of the dispersion liquid, in which
each of the two or more types of luminescent probes is a compound including a binder and a light emitter whose light emission behavior changes due to the interaction, the binder being a binder for interacting with the dispersion medium and/or the dispersoid.

An analysis method reflecting one aspect of the present invention is an analysis method for analyzing a state of a dispersion liquid containing a dispersion medium in a liquid state and a dispersoid in a solid state and dispersed in the dispersion medium, the analysis method including: causing the dispersion liquid to interact with two or more types of luminescent probes; generating a plurality of signals from the two or more types of luminescent probes having interacted with the dispersion liquid; detecting the plurality of signals; and analyzing the state of the dispersion liquid from the detected plurality of signals, in which
each of the two or more types of luminescent probes is a compound including a binder and a light emitter whose light emission behavior changes due to the interaction, the binder being a binder for interacting with the dispersion medium and/or the dispersoid.

### BRIEF DESCRIPTION OF DRAWING

The advantageous and features provided by one or more embodiments of the invention will become more fully understood from the detailed description given hereinbelow and the appended drawings which are given by way of illustration only, and thus are not intended as a definition of the limits of the present invention:
Fig. 1 is a flowchart of an analysis method according to an embodiment of the present invention;
Fig. 2 is a schematic diagram of an analysis system according to an embodiment of the present invention; and
Fig. 3 illustrates the results of analysis performed on a plurality of inkjet inks in an example.

### DESCRIPTION OF THE PREFERRED EMBODIMENTS

Hereinafter, one or more embodiments of the present invention will be described with reference to the drawings. However, the scope of the invention is not limited to the disclosed embodiments.

An analysis system and an analysis method using the analysis system of an embodiment of the present invention are used for analysis of the state of a dispersion liquid containing a liquid dispersion medium (i.e., dispersion medium in a liquid state) and a solid dispersoid (i.e., dispersoid in a solid state) dispersed in the dispersion medium.

As described above, in the case of analyzing the state of a dispersion liquid, it has been common to specify and analyze parameters assumed to be directly correlated with the performance and the like of the dispersion liquid. However, the state of a dispersion liquid is determined by a plurality of factors. Therefore, it is very difficult to specify parameters that are directly correlated. Furthermore, the above-described method requires acquisition and analysis of a huge amount of data. In addition, it is difficult to obtain an accurate result in analysis based on a plurality of factors.

In contrast, in the analysis system and the analysis method of the present embodiment, two or more types of luminescent probes are caused to interact with the dispersion liquid to generate a plurality of signals. The data obtained from the signals is not data obtained by focusing on individual factors of the dispersion liquid, but data obtained based on the comprehensive state of a dispersion liquid. Therefore, according to the present embodiment, it is possible to comprehensively analyze the state of the dispersion liquid, and it is also possible to perform performance prediction or the like of the dispersion liquid from the analyzed state. Furthermore, in the above-described method, it is not necessary to perform complicated steps such as measurement of many types of data, and the measurement can be simply performed.

Here, a dispersion liquid that can be analyzed by the analysis system or the analysis method of the present embodiment may be any dispersion liquid as long as it contains a liquid dispersion medium and a solid dispersoid.

In the present specification, the "liquid dispersion medium" may be any component as long as it is in a liquid state and thus a dispersoid can be dispersed therein at a temperature at the time of obtaining a signal from the luminescent probe during the interaction between the dispersion liquid and a luminescent probe. For example, when the dispersion liquid is caused to interact with a luminescent probe or a signal is acquired from the luminescent probe at room temperature, the dispersion medium may be any component that is in a liquid state at room temperature. On the other hand, when the above-described signal acquisition and the like are performed at a temperature higher or lower than room temperature, the dispersion medium may be any component such as a component that is in a gaseous state, a solid state, or the like at room temperature as long as it is in a liquid state at the above-described temperature. The dispersion medium may be any one of various simple substances, water, inorganic compounds, organic compounds, and the like. Further, the dispersion medium may be a specific liquid in which other components are dissolved, such as an aqueous solution. The dispersion liquid may contain only one type of dispersion medium or may contain two or more types of dispersion media.

Further, in the present specification, the "solid dispersoid" means a component which is in a solid state at a temperature at which the dispersion liquid interacts with the luminescent probe and at which a signal is obtained from the luminescent probe, and which can be dispersed in the dispersion liquid. For example, when the dispersion liquid is caused to interact with a luminescent probe at room temperature or a signal is acquired from the luminescent probe, the dispersoid may be any component that is solid at room temperature. On the other hand, when the signal acquisition and the like are performed at a temperature higher or lower than room temperature, the dispersoid may be any component such as a component that is gaseous or liquid at room temperature as long as it is solid at the temperature. Examples of the dispersoid include metal particles, inorganic particles, and organic particles (resin particles). The size (diameter) of the dispersoid is not particularly limited as long as the dispersoid can be dispersed in the dispersion medium. The dispersion liquid may contain only one type of dispersoid or two or more types of dispersoids.

The type of the dispersion liquid is not particularly limited. The dispersion liquid may further contain other components (for example, a liquid dispersoid) which are not classified as the dispersion media and the dispersoids described above. Specific examples of the dispersion liquid include inks, coating materials, and nanoparticle dispersions (dispersion liquids including nanoparticles such as resin particles, colloid particles, metal particles, metal oxide particles, and ceramics are dispersed in a dispersion medium). An example of the ink is an inkjet ink containing water and a water-soluble liquid such as alcohol as a dispersion medium, and containing pigment and resin particles as a dispersoid.

Hereinafter, the analysis method of the present embodiment will be described first, and then the analysis system will be described. In addition, in the following description, the case where each step is performed at room temperature and atmospheric pressure will be described as an example, but these may be performed in an environment other than room temperature and atmospheric pressure.

### 1. Analysis method

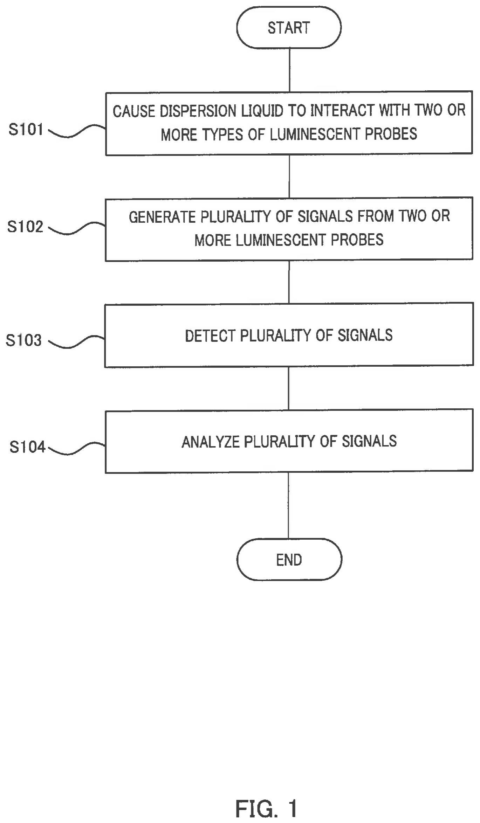

The flow of the analysis method of the present embodiment is illustrated in Fig. 1. The analysis method includes a step (interaction step) S101 of causing a dispersion liquid to interact with two or more types of luminescent probes, a step (signal generation step) S102 of generating a plurality of signals from the two or more types of luminescent probes that have interacted with the dispersion liquid, a step (signal detection step) S103 of detecting the plurality of signals, and a step (analysis step) S104 of analyzing the detected plurality of signals to analyze the state of the dispersion liquid. It should be noted that the analysis method of the present embodiment may further include a step other than these steps as long as the object and effect of the present embodiment are not impaired. For example, the method may further include a step of creating a trained model.

### (Interaction step S101)

In the interaction step S101, the dispersion liquid and two or more types of luminescent probes are caused to interact with each other. The number of luminescent probes to be caused to interact with the dispersion liquid may be two or more, and is appropriately selected depending on the type of the dispersion liquid to be analyzed. When the number of types of luminescent probes is 50 or more, more preferably 100 or more, very detailed analysis can be performed.

Further, in the present embodiment, two or more types of luminescent probes may be mixed in one dispersion liquid, and a plurality of luminescent probes may be caused to interact with the dispersion liquid collectively. However, it is preferable to divide the dispersion liquid into a plurality of portions and mix each of the divided dispersion liquid portions with one luminescent probe. When each luminescent probe is caused to interact with the dispersion liquid, it is possible to individually detect a signal from each luminescent probe in the signal detection step described below. Thus, it is easy to determine which luminescent probe's signal has changed and to what extent.

The luminescent probe is a compound including a binder for interacting with a dispersion medium and/or a dispersoid and a light emitter whose light emission behavior is changed by interaction with a dispersion liquid. The binder of the luminescent probe may include a binder (a structure or a functional group) that interacts with only one of the dispersion medium and the dispersoid, or may include binders (structures or functional groups) that interact with both of them. The "change in light emission behavior or light emission behavior is changed" in the present specification refers to a change in the presence or absence of light emission, a change in the color of light emission, a change in the intensity of light emission, or a change in the timing of light emission. In the present embodiment, for example, the light emission behavior changes as the chemical structure or physical structure of part or all of the luminescent probes changes, or the electronic state changes, depending on, for example, the chemical structure or electronic state of the dispersion medium or dispersoid in the dispersion liquid. Note that the specific structure of the luminescent probe will be described in detail below.

The method for causing the luminescent probe and the dispersion liquid to interact with each other is not particularly limited. For example, the luminescent probe and the dispersion liquid may be simply mixed. The mixture may be stirred as necessary. A specific example of a method for binding or interacting a dispersion liquid with a luminescent probe is to place a luminescent probe in each well of a microwell plate, inject the dispersion liquid into the wells, causing the dispersion liquid and the luminescent probe to interact with each other. Note that the dispersion liquid may be placed first, and then the luminescent probe or a liquid containing the luminescent probe may be injected. In addition, as another example, luminescent probes may be immobilized on wells of a microplate or a microarray, respectively, and the dispersion liquid may be introduced into the wells of the microplate or microarray according to a conventional method.

### (Signal generation step S102)

In the signal generation step S102, a plurality of signals are generated from two or more types of luminescent probes that have interacted with the dispersion liquid. The type of signal is not particularly limited as long as the signal is useful for analysis in the analysis step described below, but the luminescent probe includes, as described above, the light emitter whose light emission behavior changes by interaction with the dispersion liquid. Therefore, in the present embodiment, a method of irradiating each luminescent probe interacting with the dispersion liquid with excitation light to generate light (signal) from each luminescent probe is preferable. At this time, the wavelength of the excitation light to be emitted and the irradiation method with the excitation light are appropriately selected according to the detection method of the signal in the signal detection step, the type of the signal used for the analysis, and the like. Furthermore, as the excitation light, light having a single wavelength may be applied only once, or may be applied a plurality of times. Furthermore, as the excitation light, light rays having different wavelengths may be applied at once, or may be applied a plurality of times.

### (Signal detection step S103)

In the signal detection step S103, two or more types of signals emitted from the two or more types of luminescent probes are detected. The signal detection method is not particularly limited, and is appropriately selected according to the type of signal. For example, when light emitted from each of the luminescent probes is detected, the luminance or wavelength the light may be detected as a signal. Furthermore, a temporal change in spectral distribution of the light emitted by the luminescent probe or a temporal change in chromaticity may be detected.

### (Analysis step S104)

In the analysis step S104, the plurality of signals (data for analysis or analysis data) acquired in the signal detection step S103 are analyzed to analyze the state of the dispersion liquid. Examples of the state of a dispersion liquid include the dispersibility of the dispersoid in the dispersion liquid, the pH of the dispersion liquid, the concentration of the dispersoid, the degree of deterioration of the dispersion liquid, the presence or absence of impurities, and the like. The "state of a dispersion liquid" in the present specification does not focus on each of these states, but means a composite state of the dispersion liquid in which these are intertwined.

The analysis method in the analysis step S104 is not particularly limited. For example, the analysis data may be subjected to principal component analysis or the like for the purpose of achieving desired performance, and the correlation between the performance and the state of the dispersion liquid may be grasped, or the optimum range may be determined on the basis of these. In addition, a standard data (reference) may be obtained by performing the interaction step S101, the signal generation step S102, and the signal detection step S103 in advance on a dispersion liquid whose state is known, and the standard data may be compared with the analysis data of a dispersion liquid whose state is unknown, thereby analyzing the state of the dispersion liquid whose state is known. Furthermore, the performance of the dispersion liquid may be predicted by comparing the analysis data with, for example, a trained model.

Note that the performance of the dispersion liquid is appropriately selected according to the use of the dispersion liquid. For example, when the dispersion liquid is an inkjet ink, examples of the performance of the inkjet ink include the ejectability of the inkjet ink from a nozzle (the presence or absence of satellites, nozzle clogging, and the like), the wettability of the inkjet ink on a recording medium, the uniformity of an image obtained from the inkjet ink, the abrasion resistance of a cured product of the inkjet ink, the glossiness of the cured product of the inkjet ink, and the like. However, the present invention is not limited thereto.

Note that in the analysis in the analysis step S104, the standard data and the analysis data may be simply compared with each other, but for example, a comparison result between the standard data and the analysis data may be converted into a distance matrix and analyzed with a heat map (without weighting), the distance matrix may be subjected to principal component analysis (also referred to as PCA, weighting with emphasis on anisotropy), analysis by DL (weighting with emphasis on isotropy), or the like.

### (Other steps)

As described above, the analysis method according to the present embodiment may further include another step in addition to the above-described steps. For example, the method may further include a machine learning step of performing machine learning on arbitrary data and generating a trained model.

In the machine learning step, the interaction step S101, the signal generation step S102, the signal detection step S103, and the like described above are performed on a large number of samples (dispersion liquids). Then, a plurality of prediction models are constructed from the large number of signals acquired in the signal detection step S103. Then, by combining the results of the plurality of prediction models, a trained model capable of predicting information on a dispersion liquid is created.

The machine learning may be supervised learning or may be unsupervised learning. Note that supervised learning refers to a learning method of learning a "relationship between an input and an output" from learning data with a ground truth label. Unsupervised learning is a learning method of learning a "structure of a data group" from learning data without a ground truth label.

Alternatively, the machine learning may be reinforcement learning, deep learning, or deep layer reinforcement learning. Note that reinforcement learning refers to a learning method of learning an "optimal action sequence" by trial and error. Deep learning refers to a learning method of learning, from a large amount of data, features included in the data step by step more deeply (in deeper layers). The deep reinforcement learning refers to a learning method in which reinforcement learning and deep learning are combined.

A general analysis method (algorithm) can be applied to the machine learning. For the machine learning, it is possible to apply a prediction model constructed by an analysis method selected from, for example, linear regression (multiple regression analysis, partial least squares (PLS) regression, LASSO regression, Ridge regression, principal component regression (PCR), and the like), random forest, decision tree, support vector machine (SVM), support vector regression (SVR), neural network, discriminant analysis, and the like.

### (Luminescent probe)

The luminescent probe used in the analysis method of the present embodiment may be any compound having the following: a binder for interacting with a dispersion medium and/or a dispersoid; and a light emitter whose light emission behavior changes depending on the state of the dispersion medium or the dispersoid. The luminescent probe may have only the binder and the light emitter. On the other hand, the luminescent probe may further have a structure that does not contribute to binding to a dispersion medium or a dispersoid or to the light emission. However, it is preferable that the binder and the light emitter are arranged on the tip side of the luminescent probe, that is, on the side which easily comes into contact with a dispersion medium or a dispersoid.

Here, the binder may include a nucleic acid structure. When the luminescent probe includes a nucleic acid structure, an amino group, a carbonyl group, or the like included in a base of the nucleic acid structure tends to interact (e.g., form a hydrogen bond) with a functional group included in the dispersion medium or the dispersoid. Note that in the present specification, the nucleotide structure includes not only structures derived from DNA and RNA, but also a structure derived from phosphorothioate oligodeoxynucleotides, 2'-O-(2-methoxy) ethyl-modified nucleic acids, siRNA, crosslinked nucleic acids, peptide nucleic acids, aTNA, SNA, GNA, LNA, and morpholino antisense nucleic acids.

Furthermore, the type of light emission from the light emitter is not particularly limited as long as the light emission behavior changes depending on the state of the dispersion medium or the dispersoid. The light emitter may emit only one type of light in response to a single exciting light, but preferably exhibits two or more types of light selected from the group consisting of fluorescence, phosphorescence, excimer emission, exciplex emission, thermally activated delayed fluorescence, excited state intramolecular proton emission, triplet triplet annihilation emission, twisted intramolecular charge transfer light emission, and aggregation-induced luminescence in response to a single excitation light. When the light emitter exhibits such two or more types of light, more information can be acquired in the above-described signal detection step. For example, when the luminescent probe exhibiting the two or more types of luminescence is bonded to a dispersion medium or a dispersoid, the structure or the electronic state of the light emitter changes, and a complicated luminescence behavior different from the case of the luminescent probe alone is obtained. For example, when a luminescent probe that emits three different types of light, i.e., fluorescence, phosphorescence, and excimer emission, in response to a single excitation light is caused to interact with the dispersion liquid, the respective processes in which the fluorescence, the phosphorescence, and the excimer emission occur change, and the wavelengths and the lifetimes of the respective types of light change. Therefore, a large amount of complicated data in which these types of light are combined is obtained according to the state of the dispersion liquid or the like. According to such a complicated and large amount of data, it is possible to analyze the states of a dispersion medium and a dispersoid in very detail.

Specific examples of the luminescent probe include those having a structure with a binder composed of a nucleic acid structure and at least two chromophores or luminophores (light emitters) bound to the main chain of the nucleic acid structure. More specifically, the examples include a molecule having a main chain having one or more constitutional units containing a sugar structure derived from pentose or hexose and a phosphate ester bond bonded to the sugar structure, and one or more chromophores or luminophores bonded to the sugar structure. The luminescent probe having the above-described structure is described in detail below.

The main chain of the binder of the above-described luminescent probe need only have one or more constitutional units containing a sugar structure derived from pentose or hexose and a phosphate ester bond bonded to the sugar structure. The main chain may include only one of the constitutional units, or may include a plurality of the constitutional units. That is, the structure may be a structure having one saccharide structure and the phosphate ester bond bonded to the saccharide structure, or may be a structure alternately including the saccharide structure and the phosphate ester bond. In general, both ends of the main chain of the luminescent probe are sugar structures, and thus the number of sugar structures is larger than the number of phosphate ester bonds by one. When the main chain includes a plurality of constitutional units, the plurality of constitutional units may be the same as or different from each other.

In addition, the number of the constitutional units included in the main chain of the binder is appropriately selected according to the type of the dispersion medium or the dispersoid or the like, but is preferably 2 or more and 6 or less. When the amount of the constitutional unit is excessively large, the luminescent probe becomes more steric, and thus it may be difficult for the luminescent probe to interact with a dispersion medium or a dispersoid. On the other hand, when a luminescent probe having 6 or less of the constitutional unit is used, the luminescent probe easily interacts with a dispersion medium or a dispersoid, so that and various structural changes are easily detected. Note that the main chain of the binder may partially include a structure other than the sugar structure derived from pentose or hexose and the constitutional unit containing a phosphate ester bond, to the extent that the object and the effects of the present embodiment are not impaired. Furthermore, the structures of both ends of the main chain are not particularly limited and can be various structures such as an OH group and an alkoxy group, for example. However, the main chain of the binder is not limited to a constitutional unit including a saccharide structure derived from pentose or hexose and a phosphate ester bond. Representative examples of other constitutional units include peptide nucleic acid type constitutional units.

On the other hand, the light emitter (chromophore or luminophore) may have any structure as long as the light emitter emits a predetermined type of light by itself or emits a predetermined light by the action of a plurality of chromophores or luminophores in response to a single excitation light. Note that in the present specification, the term "chromophore" refers to a structure that absorbs light having a wavelength of 300 nm or more, and the term "luminophore" refers to a structure that absorbs light having a wavelength of 300 nm or more to emit light. Each luminescent probe may have only one chromophore or luminophore as long as the luminescent probe is capable of emitting a plurality of types of luminescence. However, the number of chromophores or luminophores is preferably 2 or more, and more preferably 3 or more and 6 or less, from the viewpoint that the luminescent probe is more likely to exhibit a plurality of types of luminescence. When the luminescent probe has a plurality of chromophores or luminophores, the number of types thereof may be only one, or may be two or more. Usually, one chromophore or luminophore is bound to one saccharide structure of the binder. Therefore, when the luminescent probe has two or more chromophores or luminophores, the number of sugar structures in the main chain of the binder is also preferably two or more. That is, the number of chromophores or luminophores in the luminescent probe is preferably the same as or smaller than the number of sugar structures (or peptide structures) in the main chain of a signal generator.

Note that when the number of chromophores or luminophores in the luminescent probe is smaller than the number of saccharide structures (or peptide structures) in the binder, some of the saccharide structures are in a state where no chromophore or luminophore is bound thereto. To the saccharide structure to which a chromophore or a luminophore is not bonded, another atomic group or the like does not have to be bonded, or a natural type nucleobase or the like may be bonded. As used herein, natural nucleobases refer to adenine, guanine, cytosine, thymine, and uracil.

Here, examples of the chromophore or the luminophore, which emits fluorescence, include structures derived from fluorescein, rhodamine, boron dipyrromethene, and the like. Examples of the chromophore or luminophore, which emits phosphorescence, include structures derived from iridium complexes, platinum complexes, and the like. Examples of the chromophore or luminophore, which emits excimer emission, include structures derived from pyrene, anthracene, perylene, and the like. Examples of the chromophore or the luminophore, which emits exciplex emission, include structures derived from pyrene-dimethylaniline and the like. Examples of the chromophore or the luminophore, which emits thermally activated delayed fluorescence, include structures derived from 4CzIPN, DABNA, and the like. Examples of the chromophore or the luminophore, which emits excited state intramolecular proton emission, include structures derived from hydroxyphenylbenzoxazole and the like. Examples of the chromophore or the luminophore, which emits triplet annihilation luminescence, include structures derived from 9-,-10-diphenylanthracene, rubrene, and the like. Examples of the chromophore or the luminophore, which emits twisted intramolecular charge transfer emission, include structures derived from diaminoanthracene, diaminonaphthalene, and the like. Examples of the chromophore or the luminophore, which emits aggregated organic luminescence, include structures derived from tetraphenylethene, hexaphenylsilole and the like.

Furthermore, a luminescent compound used as a luminescent material or host, an electron transport material, a hole transport material, or a luminescent material of an organic EL can also be suitably used as a material of the chromophore or the luminophore. Furthermore, the luminescent probe may further include a structure having various functions as a site for controlling the interaction between the binder and a dispersion liquids.

In the present embodiment, the luminescent probe preferably contains, as a chromophore or a luminophore, at least one structure selected from a structure emitting fluorescence, a structure emitting excimer emission, and a structure emitting exciplex luminescence. In particular, the luminescent probe preferably contains at least a structure that emits fluorescence. In the case where the luminescent probe emits fluorescence, there is an advantage that it is easy to analyze with various measurement devices.

Furthermore, the light emitter of the luminescent probe preferably emits a plurality of types of light upon irradiation with light having a wavelength of 300 to 400 nm. When the luminescent probe emits a plurality of types of light by irradiation with light having the above-mentioned wavelength, a special light source is not required when the dispersion medium or the dispersoid is analyzed.

Provided that excitation in a visible light region is advantageous when an LED or an organic EL element is used as an excitation light source. Therefore, when such light sources are used, the absorption wavelength of the luminescent probe is preferably 400 to 700 nm.

The molecular weight of the luminescent probe is appropriately selected depending on the type and the like of the binder and the light emitter of the luminescent probe, but is usually preferably 500 or more and 10000 or less, more preferably 500 or more and 4000 or less. When the molecular weight of the luminescent probe is 10,000 or less, the luminescent probe is more likely to interact with the dispersion medium and the dispersoid.

The method for producing the luminescent probe is appropriately selected depending on the structure of the binder in the luminescent probe. For example, the luminescent probe having the above-described sugar structure can be produced by the following method. A monomer in which the chromophore or the luminophore and the phosphate ester are bonded to pentose or hexose is prepared. The luminescent probe can be synthesized by polymerizing the above-mentioned monomers in a desired sequence using a phosphoramidite method with a DNA/RNA synthesizer or the like. According to such a method, a plurality of types of monomers having different types of chromophores or luminophores are prepared, and the order of arrangement of the monomers can be changed to bond the desired number of monomers. That is, a wide variety of luminescent probes can be synthesized from a plurality of types of monomers having different types of chromophores or luminophores. It is possible to synthesize a large number of types of luminescent probes by changing the types of monomers to be used and the number of bonds of the monomers.

### 2. Analysis system

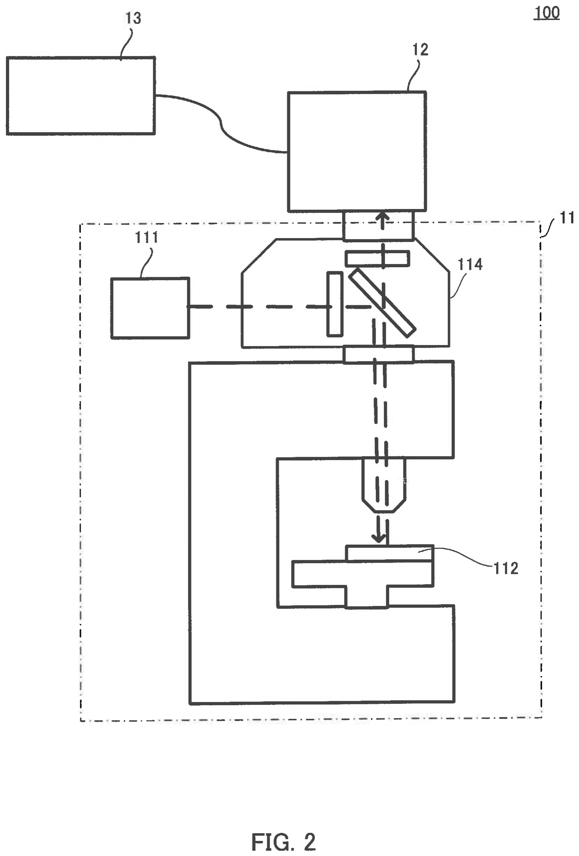

FIG. 2 is a schematic diagram illustrating a configuration of a analysis system for performing the above-described analysis method. However, the configuration of the analysis system is not limited to the above-described configuration. The analysis system 100 illustrated in Fig. 2 includes a signal generator 11 for generating a plurality of signals based on interaction of a dispersion liquid (a dispersion medium, a dispersoid, or the like) with two or more types of luminescent probes, a detector 12 for detecting the plurality of signals from the signal generator 11, and an analyzer 13 for analyzing the plurality of signals detected by the detector 12 to analyze the state of the dispersion liquid. The analysis system 100 may include other components according to the use thereof. Hereinafter, each configuration will be described.

### (Signal generator)

The signal generator 11 has a configuration for generating a signal based on the interaction between a dispersion liquid and two or more types of luminescent probes. The structure of the signal generator 11 is appropriately selected according to the type of signal to be generated. The signal generator 11 of the present embodiment irradiates the luminescent probe with light to cause the luminescent probe to emit light. The signal generator 11 includes a light source 111, a housing 112 for housing a luminescent probe and a dispersion liquid, and an optical system 114 for guiding light from the light source 111 to (the luminescent probe housed in) the housing 112.

The light source 111 is not particularly limited as long as it can irradiate the luminescent probe having interacted with the dispersion liquid with light having a desired wavelength for a desired period of time. Examples of suitable light sources include picosecond diode lasers, tunable lasers, supercontinuum light sources, LED light sources, and the like. According to these light sources 111, the luminescent probe can be irradiated with light having a predetermined wavelength only for a short time. In view of the signal/noise ratio (SN) in the detector 12, it is preferable to select a light source whose emitted light can be quenched by the time the luminescent probe emits light.

The housing 112 is not particularly limited as long as it has a structure capable of accommodating the above-described luminescent probe and dispersion liquid. Examples of the housing 112 include microwell plates, microplates, and microarrays. It should be noted that a luminescent probe may be housed in the housing 112 in advance. On the other hand, a dispersion liquid may be stored.

The optical system 114 is not particularly limited as long as it can guide the light from the light source 111 to the housing 112 side (the housing houses the luminescent probe or the dispersion liquid), and can guide the light emitted by the luminescent probe to the detector 12 side. The optical system 114 may include, for example, an excitation light filter (not illustrated) for cutting light of an unnecessary wavelength emitted from the source 111. The optical system 114 may include a dichroic mirror (not illustrated) that reflects light from the light sources 111 toward the housing 112 and transmits light emitted by the luminescent probe. Further, the optical system 114 may include an optical filter or the like that cuts light of an unnecessary wavelength out of the light transmitted through the dichroic mirror.

### (Detector)

The detector 12 is not particularly limited as long as it is a means capable of acquiring a plurality of signals (herein, the plurality of light rays) emitted by the plurality of luminescent probes. The detector is appropriately selected in accordance with the type of signal to be acquired. In the case where the signal is light as in the present embodiment, a known camera or the like may be used. Further, for example, a CCD camera, a CMOS camera, or the like that intermittently or continuously captures an image may be used.

### (Analyzer)

The analyzer 13 may be any means that can analyze the plurality of signals acquired by the detector 12 described above. For example, the analyzer may read separately acquired standard data, and may compare the standard data and the plurality of signals (analysis data) acquired by the detector 12 with each other to analyze the state of the dispersion liquid and further predict its performance. Further, the analyzer 13 may read the trained model from an external storage device (not illustrated) or an internal storage means (not illustrated), and compare the trained model with the analysis data.

As the analyzer 13, a general computer (general-purpose computer) including a storage unit such as a hard disk drive (HDD), a solid state drive (SSD), or a read only memory (ROM) that stores a program, data, or the like, and a central processing unit (CPU) that executes a program, performs calculation processing, or the like can be used. The computer may further include input means such as a keyboard and a mouse, and output means such as a monitor and a printer.

### Examples

### 1. Preparation of Luminescent Probe

First, 83 type of luminescent probe represented by the following chemical formula was prepared. The 83 types of luminescent probes have structures in which 13 types of groups (luminophore, chromophore, or other groups) shown on the right side are bonded to the R position of the structure on the left side of the following chemical formula. The combinations of the groups represented by R constitute 83 types.

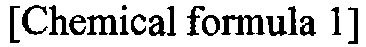

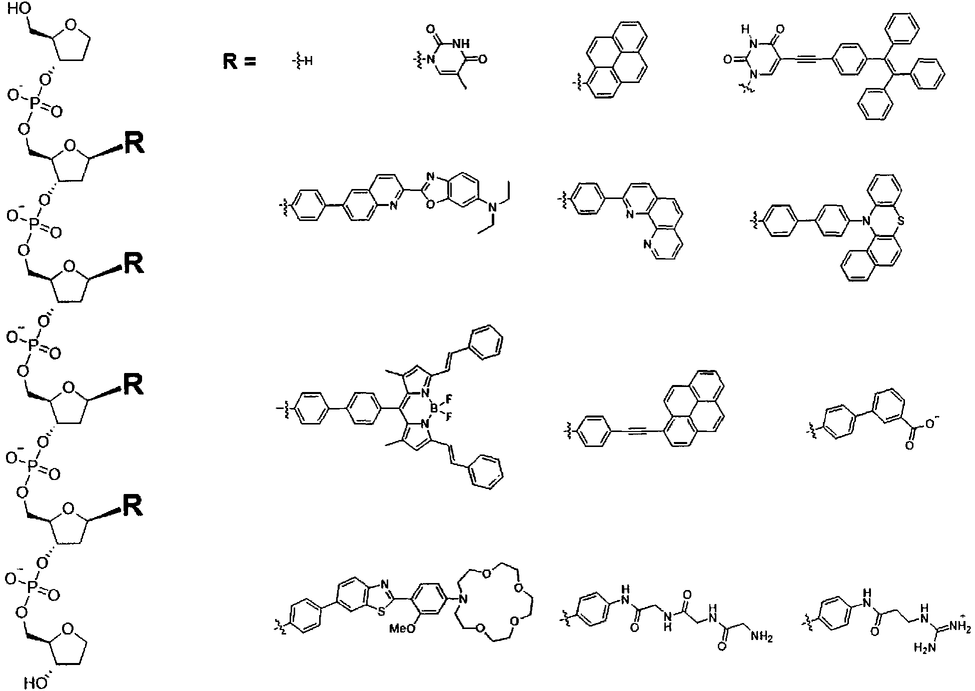

### 2. Preparation of Ink (Resin Dispersion)

### 2-1. Preparation of Materials

The following materials were prepared.

### (Dispersoid (resin particles))

- EMN-325 (Acryset, acryl-based elastomer, manufactured by Nippon Shokubai Co., Ltd)
- Elastollan 1185A (manufactured by BASF SE, thermo-plastic polyurethane elastomer)
- MD-2000 (VYLONAL (registered trademark) manufactured by TOYOBO CO., LTD., water-dispersible polyester resin)

### (Dispersion medium)

- Mixed liquid of water and ethylene glycol (concentration of ethylene glycol: 3 mass%)

### (Others (surfactant and the like))

- EMULGEN 709 (polyoxyethylene higher alkyl ether, manufactured by Kao Corporation)

### 2-2. Preparation of Ink (Resin Dispersion)

The above components were combined and mixed at the following ratios (mass ratios) to prepare 23 types of inkjet inks.

**[Table 1]**

| Type | | Amount |
|---|---|---|
| Dispersoid | EMN-325 | 5 to 10 parts by mass |
| | Elastollan 1185A | 5 to 10 parts by mass |
| | MD-2000 | 3 to 8 parts by mass |
| Dispersion medium | | 71.5 to 86.5 parts by mass |
| Others (surfactant) | | 0.5 parts by mass |

### 3. Interaction step

A 96-well microwell plate in which wells with an opening diameter of 7 mm were arranged in 12 columns and 8 rows at intervals of 9 mm was prepared, the number of which was equal to the number of types of inkjet ink (23). Into the wells of each of the 96-well microwell plates, 10 µl of each of the above luminescent probes 1 to 83 was individually placed using an automatic dispenser (NichiMart CUBE, manufactured by Nichiryo Co., Ltd.). Similarly, the luminescent probes 1 to 83 were individually placed in the wells of all the microwell plates.

The samples (inkjet ink) (10 µl) were respectively placed in the wells of each microwell plate containing the luminescent probe, and the luminescent probe and components in the inkjet ink were caused to interact with each other. One microwell plate was prepared for each sample.

### 4. Signal generation step and signal detection step

The microwell plate was irradiated with excitation light (wavelength 365 nm) (signal generation step). The fluorescence spectrum at this time was captured by a camera, and RGB information of each microwell plate was acquired (signal detection step). The same operation was performed on all microwell plates.

### 5 Confirmation of Ejectability of Each Ink

Each of the 23 types of inkjet inks used in the above-described analysis was ejected by a line system using a KM 1024iMHE manufactured by Konica Minolta, Inc. under ejection conditions of a droplet ejection amount of 13pL. After it was confirmed that the ink in the device was discharged from all the 60 nozzles at the start of discharge, the ink was continuously discharged for 60 minutes. Then, after the completion of the continuous ejection for 60 minute, the number of nozzles that were able to eject to the end (the number of ejection nozzles after the completion of the continuous ejection for 60 minutes) was counted. The number of ejection nozzles after completion of continuous ejection for 60 minutes was applied to the following evaluation criteria to evaluate the ejectability of the ink.
∘ (Good): small main droplet blurring, small satellite scattering, small satellite shift, and no ejection failure at the time of AIL
× (Poor): other than the above-described ∘ (Good)

### 6. Analysis step

For the RGB data of each microwell plate acquired in the signal detection step, pre-processing was performed by reducing the number of types of luminescent probes to five according to the Hilbert-Schmidt Independence Criterion (HSIC) with a significance level of 5%, using the ejectability as an objective variable. Thereafter, principal component analysis was performed, and a three dimensional space composed of the principal component 1, the principal component 2, and the principal component 3 was orthogonally projected onto a two dimensional plane according to the following two criteria.
(i) Good and Poor areas are separated from each other
(ii) within-class variance is small in Good

As a result, the basal Basis 1 and the Basis 2 of the two dimensional plane were as follows.
Basis 1 = -0.24 × PC1-0.66 × PC2 + 0. 71 × PC3
Basis 2=-0.28×PC1+0.66×PC2-0.70×PC3

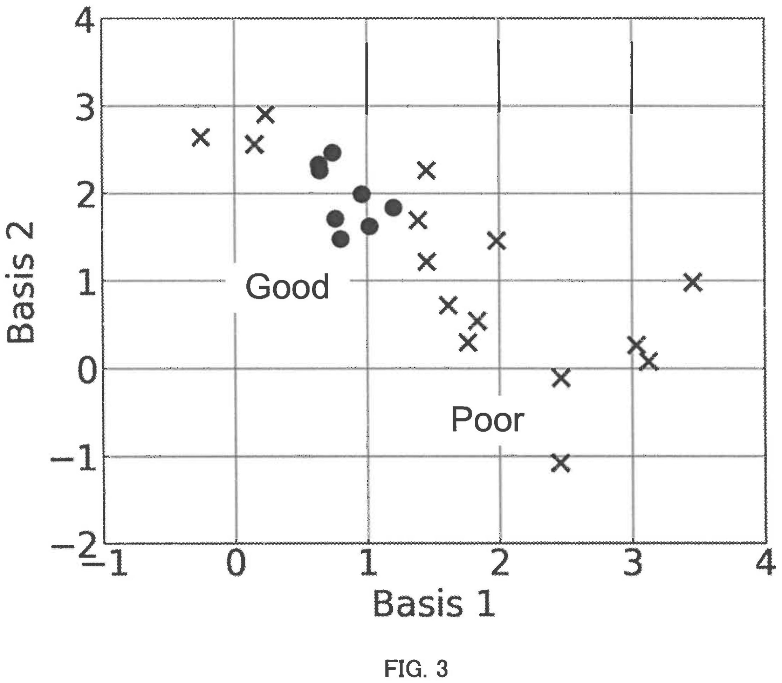

A visualization of this two dimensional plane is illustrated in Fig. 3.

### 7. Verification

The results obtained above are indicated by ● (black circle) and × in Fig. 3. As shown in FIG. 3, the inkjet inks for which the evaluation of the ejectability is satisfactory (evaluation = **●**) are concentrated in a specific region of Basis 1 and Basis 2. The inkjet inks for which the evaluation of the ejectability is low (evaluation = × ) was distributed outside the region in the graph. This means that it is possible to predict that, for an inkjet ink whose ejectability is unknown, the ejectability is good when the analysis data is within a predetermined range, and it is possible to predict that the ejectability is low when the analysis data is not within the predetermined range, by analyzing the signal obtained by performing each of the above-described steps.

Further, the ink-jet ink having satisfactory ejectability exhibited stable droplet formation behavior and little satellite formation. On the other hand, with an inkjet ink having a low evaluation of the ejectability, satellites were generated and a decrease in speed was observed during the AIL (Air Ingestion Limit). That is, the analysis result in the above-described method reflects composite information of the dispersion liquid such as the ejectability of the inkjet ink. Therefore, it is possible to comprehensively evaluate a difference that cannot be grasped only by a conventional single physical property index. Therefore, the state of the dispersion liquid can be accurately analyzed, and the performance thereof can be predicted on the basis of the analysis.

Although embodiments of the present invention have been described and illustrated in detail, it is clearly understood that the same is by way of illustration and example only and not limitation, the scope of the present invention should be interpreted by terms of the appended claims.

### Industrial Applicability

According to the analysis system and the analysis method described above, it is possible to analyze the state of a dispersion liquid without using a special device or performing a complicated pretreatment. Therefore, it is very useful, for example, in the production of inks and coating materials.

## Claims

1. An analysis system for analyzing a state of a dispersion liquid containing a dispersion medium in a liquid state and a dispersoid in a solid state and dispersed in the dispersion medium, the analysis system comprising:
a signal generator for generating a plurality of signals based on interaction of the dispersion liquid with two or more types of luminescent probes;
a detector for detecting the plurality of signals from the signal generator; and
an analyzer for analyzing the plurality of signals detected by the detector to analyze the state of the dispersion liquid,
wherein
each of the two or more types of luminescent probes is a compound including a binder and a light emitter whose light emission behavior changes due to the interaction, the binder being a binder for interacting with the dispersion medium and/or the dispersoid.

2. The analysis system according to claim 1, wherein
the dispersion liquid is an ink or a coating material.

3. The analysis system according to claim 1, wherein
the dispersoid is a pigment and/or a resin particle.

4. The analysis system according to claim 1, wherein
the dispersion liquid is an inkjet ink.

5. The analysis system according to claim 1, wherein
the signal generator includes an housing that houses at least one of the two or more types of luminescent probes.

6. The analysis system according to claim 1, wherein
the analyzer predicts a performance of the dispersion liquid by referring to a trained model.

7. The analysis system according to claim 6, wherein:
the dispersion liquid is an inkjet ink; and
the analyzer predicts at least one performance selected from the group consisting of wettability of the inkjet ink to a recording medium, ejectability of the inkjet ink from a nozzle, uniformity of an image obtained from the inkjet ink, abrasion resistance of a cured product of the inkjet ink, and glossiness of the cured product of the inkjet ink.

8. An analysis method for analyzing a state of a dispersion liquid containing a dispersion medium in a liquid state and a dispersoid in a solid state and dispersed in the dispersion medium, the analysis method comprising:
causing the dispersion liquid to interact with two or more types of luminescent probes;
generating a plurality of signals from the two or more types of luminescent probes having interacted with the dispersion liquid;
detecting the plurality of signals; and
analyzing the state of the dispersion liquid from the detected plurality of signals,
wherein
each of the two or more types of luminescent probes is a compound including a binder and a light emitter whose light emission behavior changes due to the interaction, the binder being a binder for interacting with the dispersion medium and/or the dispersoid.

9. The analysis method according to claim 8, wherein:
the generating the plurality of signals is irradiating the two or more types of luminescent probes with excitation light; and
the detecting the plurality of signals is detecting luminance and/or chromaticity of light.

10. The analysis method according to claim 8, wherein
in the analyzing the state of the dispersion liquid, a performance of the dispersion liquid is predicted with reference to a trained model.
